# EUROPÄISCHE PATENTSCHRIFT

(11) **EP 0 373 581 B1**
(45) Veröffentlichungstag und Bekanntmachung des Hinweises auf die Patenterteilung: **05.05.1993**
(21) Anmeldenummer: 89122890.0
(22) Anmeldetag: 12.12.1989
(51) Int. Cl.: G01K 1/02

(54) **Digitalanzeigendes Thermometer für Aussentemperaturen**
Digital thermometer for outside temperatures
Thermomètre numérique pour températures extérieures

(30) Priorität: 16.12.1988 DE 8815654 U
(43) Veröffentlichungstag der Anmeldung: 20.06.1990
(73) Patentinhaber: DIEHL GMBH & CO., 90478 Nürnberg (DE)
(72) Erfinder: Meisner, Alfred, D-8500 Nürnberg (DE)

(56) Entgegenhaltungen:
- FR-A- 2 552 877
- US-A- 4 539 516
- US-A- 4 601 589
- PATENT ABSTRACTS OF JAPAN vol. 012, no. 180 (P-709)(135376) 27 Mai 1988;& JP-A-62291527

## Beschreibung

Die Erfindung bezieht sich auf ein digitalanzeigendes Thermometer für Außentemperaturen mit einer Digitalanzeige an der Vorderseite des Gehäuses des Thermometers, wobei eine Solarzelle für die Stromversorgung und ein Temperatursensor für die Temperaturmessung vorgesehen sind.

Außenthermometer, welche am Fenster oder an der Wand angebracht werden, sind langbekannter Stand der Technik. Diese Thermometer zeigen entweder mit einer sich ausdehnenden Flüssigkeit oder auf der Basis eines sich mit der Temperatur in seiner Länge ändernden Materials die Temperatur an. Die Anzeige erfolgt über eine Flüssigkeitssäule oder analog durch Auslenkung eines Zeigers.

Aus der US-PS 4,601,589 ist bereits ein digitalanzeigendes Thermometer bekanntgeworden, welches mit einer LCD-Digitalanzeige an der Vorderseite des Gehäuses, einer Solarzelle für die Stromversorgung und einem Temperatursensor für die Temperaturmessung ausgestattet ist. Bei einem Ausführungsbeispiel dieses Thermometers ist der Temperatursensor als Stützfuß ausgebildet und befindet sich auf der von der Solarzelle abgewandten Seite des Thermometers. Er liegt daher in der Regel in der nicht vom Außenlicht beschienen Seite des Thermometers, also im Schattenbereich.

Aus der JP-A-62 291 527 ist es auch bereits bekannt, bei digitalanzeigenden Thermometern eine LCD-Anzeige und eine Solarzelle für die Stromversorgung sowie einen Temperatursensor zu verwenden. Ein Kondensator dient zur Pufferung der von der Solarzelle gelieferten Energie und betreibt einen Mikrocomputer.

Ausgehend von dem Stand der Technik ist es Aufgabe der Erfindung, ein digitalanzeigendes, elektronisches Thermometer vorzuschlagen, welches Außentemperaturen mißt, aber von der der Solarzelle abgewandten Seite ablesbar ist.

Zur Lösung dieser Aufgabe schlägt die Erfindung vor, daß die Solarzelle an der Außenseite eines ausklappbaren Deckels an der Rückseite des Gehäuses und der Temperatursensor an der Unterseite dieses Deckels angebracht sind.

Gemäß einer Weiterbildung der Erfindung können an dem Gehäuse Befestigungselemente für dessen Anbringung an einem Fenster oder einer Wand vorgesehen sein.

Solche Befestigungselemente können in einer bevorzugten Ausgestaltung der Erfindung Haftstreifen sein.

Nachfolgend soll die Neuerung anhand der Zeichnung an einem Ausführungsbeispiel noch näher erläutert werden.

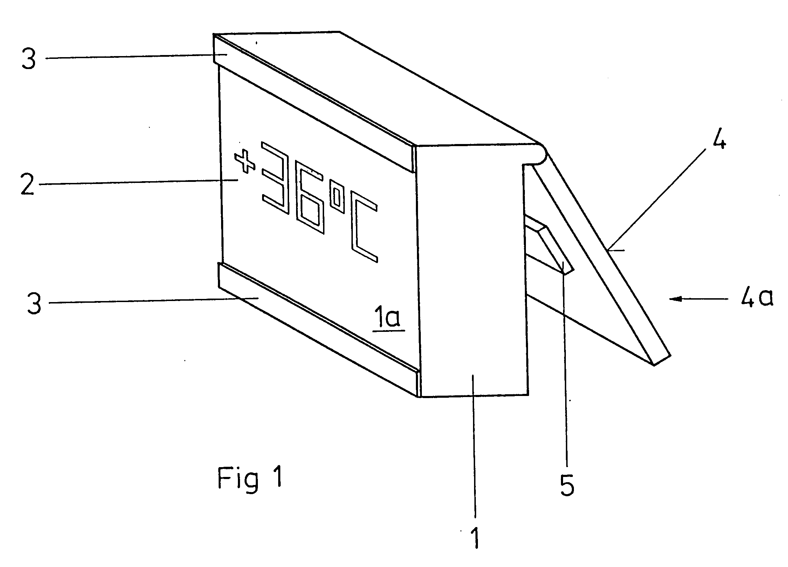

- Figur 1: zeigt das Thermometer in perspektivischer Ansicht,
- Figur 2: zeigt ein Blockschaltbild der elektronischen Schaltung des Thermometers.

Ein Gehäuse 1 eines elektronischen Thermometers trägt an seiner Vorderseite 1a eine Digitalanzeige 2 für die Temperatur. Die Temperaturgrade über und unter 0^{o} Celsius werden durch ein "+" oder "-" angezeigt. Im Randbereich der Vorderseite des Gehäuses sind Haftstreifen 3 angebracht, mit deren Hilfe das Thermometer an die Außenseite eines Fensters angeklebt werden kann. Im Sinne der Neuerung wäre es selbstverständlich auch möglich, hier Befestigungslaschen vorzusehen, die um das Gehäuse herumgebogen sind, um dieses in passender Form an einer Wand oder einer sonstigen Befestigungsstelle anzubringen.

An der Rückseite des Gehäuses 1 ist ein aufklappbarer Deckel 4 vorgesehen, welcher an seiner Außenseite eine Solarzelle 4a üblicher Bauart aufweist. Dieser Deckel 4 ist durch einen nicht dargestellten Federmechanismus in der dargestellten Lage feststellbar. An der Innenseite des Deckels befindet sich ein elektrischer Temperatursensor 5, welcher an dieser Stelle nicht der Erwärmung durch das Sonnenlicht ausgesetzt ist und daher eine ausreichend genaue Temperaturmessung vornehmen kann.

Ein Thermometer der vorbeschriebenen Art hat den Vorteil, daß es eine genaue digitale Anzeige der Temperatur ermöglicht und damit Ablesefehler weitestgehend ausgeschaltet sind, wobei keine Batteriewechsel aufgrund der eingebauten Solarzelle erforderlich werden und wobei der Temperatursensor aufgrund seiner Anbringung von Strahlungswärme unbeeinflußt arbeitet. Es ist somit nicht nur eine genaue Temperaturmessung, sondern auch eine genaue Temperaturablesung an der Anzeige möglich.

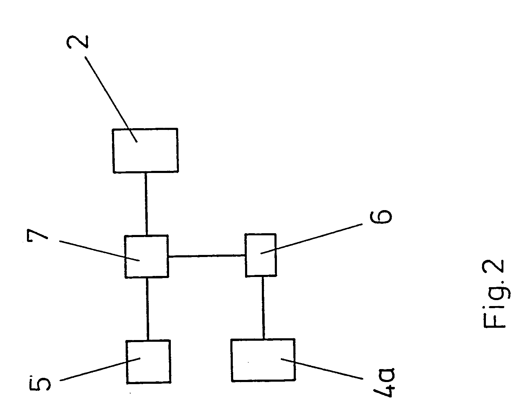

In Figur 2 ist ein Blockschaltbild der elektronischen Schaltung dargestellt, welche in vollem Umfange aus handelsüblichen Baugruppen aufbaubar ist. Mit 5 ist der Temperatursensor bezeichnet, mit 4a die Solarzelle. Letztere lädt einen Akku oder Speicherkondensator 6 auf, der eine elektronische Auswerteschaltung 7 mit Strom versorgt. Diese Auswerteschaltung erhält von dem Temperatursensor 5 das Mess-Signal und bereitet dieses für die Anzeige an der Digitalanzeige 2 auf.

## Patentansprüche

1. Digitalanzeigendes Thermometer für Außentemperaturen mit einer Digitalanzeige an der Vorderseite des Gehäuses des Thermometers, wobei eine Solarzelle (4a) für die Stromversorgung und ein Temperatursensor (5) für die Temperaturmessung vorgesehen sind,
dadurch gekennzeichnet,
daß die Solarzelle (4a) an der Außenseite eines ausklappbaren Deckels (4) an der Rückseite des Gehäuses und der Temperatursensor (5) an der Unterseite dieses Deckels (4) angebracht sind.

2. Thermometer nach Anspruch 1,
dadurch gekennzeichnet,
daß an dem Gehäuse (1) Befestigungselemente für dessen Anbringung an einem Fenster oder einer Wand vorgesehen sind.

3. Thermometer nach Anspruch 2,
dadurch gekennzeichnet,
daß an der Vorderseite (1a) des Gehäuses (1) Haftstreifen (3) angebracht sind.

4. Thermometer nach Anspruch 1,
dadurch gekennzeichnet,
daß die Digitalanzeige (2) als LCD-Anzeige ausgebildet ist.

## Claims

1. A digitally displaying thermometer for external temperatures with a digital display on the front of the housing of the thermometer, a solar cell (4a) being provided for the current supply and a temperature sensor (5) being provided for the temperature measurement, characterized in that the solar cell (4a) is mounted on the outside of a lid (4) which can swing out at the rear of the housing and the temperature sensor (5) mounted on the underside of this lid (4).

2. A thermometer according to claim 1, characterised in that fastening elements are provided on the housing (1) for the mounting thereof on a window or a wall.

3. A thermometer according to claim 2, characterised in that adhesive strips (3) are affixed to the front (1a) of the housing (1).

4. A thermometer according to claim 1, characterised in that the digital display (2) is designed as an LCD display.

## Revendications

1. Thermomètre à affichage numérique, pour températures extérieures, avec un affichage numérique en face avant du boîtier du thermomètre, une cellule solaire (4a) étant prévue pour assurer l'alimentation électrique et un capteur de température (5) pour assurer la mesure de la température, caractérisé en ce que la cellule solaire (4a) est montée sur la face extérieure d'un couvercle (4) ouvrable par rabattement sur la face arrière du boîtier et le capteur de température (5) est monté sur la face inférieure de ce couvercle (4).

2. Thermomètre selon la revendication 1, caractérisé en ce que des éléments de fixation sont prévus sur le boîtier (1), en vue de monter ce dernier sur une fenêtre ou un mur.

3. Thermomètre selon la revendication 2, caractérisé en ce que des bandes adhésives (3) sont appliquées sur la face avant (1a) du boîtier (1).

4. Thermomètre selon la revendication 1, caractérisé en ce que l'affichage numérique (2) est réalisé sous forme d'affichage à diode à cristaux liquides.
